Europäisches Patentamt

European Patent Office

Office européen des brevets

(11) Veröffentlichungsnummer : **0 334 909 B1**

(12) **EUROPÄISCHE PATENTSCHRIFT**

(45) Veröffentlichungstag der Patentschrift :
**22.01.92 Patentblatt 92/04**

(21) Anmeldenummer : **88907614.7**

(22) Anmeldetag : **21.09.88**

(86) Internationale Anmeldenummer :
**PCT/DE88/00585**

(87) Internationale Veröffentlichungsnummer :
**WO 89/02995 06.04.89 Gazette 89/08**

(51) Int. Cl.⁵ : **F16H 3/12, F16D 23/02**

(54) **STUFENGETRIEBE FÜR KRAFTFAHRZEUGE.**

(30) Priorität : **26.09.87 DE 3732525**

(43) Veröffentlichungstag der Anmeldung :
**04.10.89 Patentblatt 89/40**

(45) Bekanntmachung des Hinweises auf die
Patenterteilung :
**22.01.92 Patentblatt 92/04**

(84) Benannte Vertragsstaaten :
**DE FR GB**

(56) Entgegenhaltungen :
**DE-A- 2 452 768**
**FR-A- 2 250 404**
**US-A- 4 257 284**
**US-A- 4 641 734**

(73) Patentinhaber : **MÜLLER, Erich**
**Hohestrasse 15**
**W-7110 Öhringen-Cappel (DE)**
Patentinhaber : **PRIWITZER, Günther**
**Hofgartenweg 20**
**W-7110 Öhringen (DE)**
Patentinhaber : **MARTIN, Felix**
**Hermann-Hagenmeyer-Strasse 16**
**W-7113 Neuenstein (DE)**

(72) Erfinder : **MÜLLER, Erich**
**Hohestrasse 15**
**W-7110 Öhringen-Cappel (DE)**
Erfinder : **PRIWITZER, Günther**
**Hofgartenweg 20**
**W-7110 Öhringen (DE)**
Erfinder : **MARTIN, Felix**
**Hermann-Hagenmeyer-Strasse 16**
**W-7113 Neuenstein (DE)**

(74) Vertreter : **Lorenz, Werner, Dipl.-Ing.**
**Fasanenstrasse 7**
**W-7920 Heidenheim (DE)**

EP 0 334 909 B1

## Beschreibung

Die Erfindung betrifft ein Stufengetriebe für Kraftfahrzeuge, mit einem ersten Zahnrad und einem zweiten Zahnrad, die auf einer gemeinsamen Welle nebeneinander angeordnet sind, mit zwischen den Zahnrädern angeordneten und relativ zu diesen axial verschieblichen Synchronisierungsmitteln zum Angleichen der Drehzahlen der Zahnräder, wobei ein Betätigungselement der Synchronisierungsmittel mit dem ersten Zahnrad umläuft, diesem gegenüber um einen begrenzten Winkel verdrehbar ist und eine Umfangs-Reibfläche aufweist, die durch axiales Verschieben mit einer Gegen-Reibfläche des zweiten Zahnrades in Reibschluß bringbar ist und weiterhin eine zur Radialebene schräg angestellte erste Keilfläche aufweist, die an einer zugeordneten zweiten Keilfläche anliegt.

Stufengetriebe der vorstehend genannten Art sind als sogenannte sperrsynchronisierte Stufengetriebe allgemein bekannt.

Bei üblichen Stufengetrieben dieser Bauart sind das erste Zahnrad drehfest und das zweite Zahnrad drehbar auf der Welle angeordnet. Das zweite Zahnrad kämmt mit einem dritten Zahnrad, das auf einer zur ersten Welle parallelen zweiten Welle drehfest angeordnet ist. Die Synchronisierungsmittel sind üblicherweise als Synchronringe ausgebildet, die mit dem ersten Zahnrad umlaufen und über einen geringen Drehwinkelbereich relativ zu diesem verdrehbar sind. Über die Außenverzahnungen der Zahnräder hinweg ist eine Schaltmuffe mittels einer Schaltgabel verschiebbar, wobei die Schaltmuffe eine Innenverzahnung bzw. Innenklauen aufweist, die formschlüssig in die Außenverzahnungen des ersten und zweiten Zahnrades greift und diese somit drehstarr miteinander verbindet.

Bevor diese drehstarre Verbindung jedoch hergestellt werden kann, schiebt die Schaltmuffe den Synchronring mit einer üblicherweise konischen Reibfläche gegen eine Gegenfläche am zweiten Zahnrad, so daß bei Drehzahldifferenz zwischen ersten und zweiten Zahnrad ein Reibmoment erzeugt wird, das den Synchronring relativ zum ersten Zahnrad um den genannten endlichen Drehwinkel verdreht. In diesem verdrehten Zustand sperrt der Synchronring das weitere axiale Verschieben der Schaltmuffe, so daß der betreffende Gang nicht eingelegt werden kann, solange nicht Drehzahlgleichheit zwischen dem ersten und dem zweiten Zahnrad besteht. Erst wenn dies der Fall ist, das Reibmoment also zu null geworden ist, kann der Synchronring sich wieder in die unverdrehte Ausgangslage zurückdrehen, beispielsweise unter der Kraft einer entsprechenden Rückstellfeder, und der axiale Verschiebeweg für die Schaltmuffe ist frei, um nunmehr das erste und das zweite Zahnrad in Formschluß miteinander zu bringen und damit den gewünschten Gang einzulegen.

Aus der vorstehenden Schilderung der Wirkungsweise üblicher sperrsynchronisierter Stufengetriebe folgt, daß der Synchronisierungsvorgang in hohem Maße davon abhängt, wie der Fahrer des Kraftfahrzeuges den Gangwechsel durch Betätigen des Schalthebels vollzieht. Wird nämlich die Schaltmuffe relativ kräftig verschoben und der Synchronring infolgedessen mit großem Anpreßdruck in Anlage an die Gegenfläche des zweiten Zahnrades gebracht, entsteht sofort ein relativ großes Reibmoment, und die Drehzahlangleichung erfolgt verhältnismäßig schnell. Umgekehrt gleichen sich die Drehzahlen nur sehr langsam aneinander an, wenn die Schaltmuffe nur mit geringer axialer Betätigungskraft ausgelenkt wird. Naturgemäß hat dies Einfluß auf die Schaltzeit, weil der Drehzahlgradient des abzubremsenden oder zu beschleunigenden Rades vom Betrag des Reibmomentes abhängt und direkt die Schaltzeit beeinflußt.

Auch der Verschleiß an den Reibflächen des Synchronringes bzw. an der Gegenfläche und auch der Verschleiß an den Verzahnungen hängt naturgemäß von der Kraft ab, mit der die Schaltmuffen axial ausgelenkt werden.

In der FR-A-2250404, von der auch bei der Abfassung des Oberbegriffes von Anspruch 1 ausgegangen worden ist, werden die Synchronringe mit Federn in der Ruhelage fixiert. Dies kann aber dazu führen, daß, wenn die Synchronisierung einmal eingeleitet worden ist, diese dann von selbst weiterläuft und zu einer Selbstzerstörung der Synchronisierung führen kann.

Der Erfindung liegt demgegenüber die Aufgabe zugrunde, ein Stufengetriebe der eingangs genannten Art dahingehend weiterzubilden, daß der Synchronisierungsvorgang unabhängig von der vom Fahrer aufgewandten Schaltkraft abläuft und Fehlfunktionen vermieden werden.

Diese Aufgabe wird erfindungsgemäß dadurch gelöst, daß das zweite Zahnrad mit einem weiteren, auf einer zur ersten Welle parallelen zweiten Wellle drehfest angeordneten dritten Zahnrad kämmt, daß das erste Zahnrad mit einem Synchronring umläuft, daß eine erste Reibfläche am Synchronring mit einer Gegen-Reibfläche am zweiten Zahnrad zusammenarbeitet und daß eine Schaltmuffe formschlüssig über das erste und das zweite Zahnrad schiebbar ist.

Die der Erfindung zugrundeliegende Aufgabe wird auf diese Weise vollkommen gelöst. Der Fahrer braucht nämlich beim Schalten des Stufengetriebes den Synchronisierungsvorgang nur noch durch Anlegen der Reibflächen aneinander zu initiieren, weil das entstehende Reibmoment sogleich zu einer axialen Auslenkung des Betätigungselementes über das erfindungsgemäß vorgesehene Keilgetriebe führt und durch die axiale Aus-

2

lenkung wiederum das Reibmoment gezielt erhöht wird. Durch Einstellen der Geometrie der Keilflächen und der Reibflächen sowie durch Auswahl des Reibbeiwertes kann somit ein sich selbsttätig einstellender Reibmomentverlauf über der Zeit vorgewählt werden, der einen stets gleichen Synchronisierungsvorgang gewährleistet.

Dies hat den weiteren Vorteil, daß eine konstante Schaltzeit vorgegeben werden kann, und auch der Verschleiß kann konstant eingestellt werden, so daß die Lebensdauer der Elemente präzise vorausberechnet werden kann. Schließlich hat die Erfindung noch den Vorteil, daß ein wesentlicher Beitrag zur Automatisierung von Stufengetrieben mit Stirnradverzahnung und Zugkraftunterbrechung geleistet wird, weil bei der vorstehend beschriebenen Selbstregelung des Synchronisierungsvorganges lediglich noch der Anstoß zum Einleiten der Synchronisierung gegeben werden muß, was durch einen einfachen mechanischen Impulsgeber o.dgl. in Abhängigkeit von einem elektronischen Steuergerät problemlos erreicht werden kann.

Erfindungsgemäß ist nunmehr der eine Synchronring gegenüber dem anderen verriegelt, so daß es nicht zu einer Fehlfunkktion und damit zu einer Zerstörung der Synchronisiereinrichtung kommen kann. Praktisch erfolgt in der Neutralstellung eine Rastierung. Sobald die Schaltung vollzogen wird, wird der eine Synchronring gegenüber dem anderen, der bewegt wird, verriegelt, so daß der nichtbewegte Synchronring mechanisch nicht aus seiner Stellung heraus kann.

Von Vorteil ist auch, daß die Erfindung sich ohne Probleme in bereits bestehende Getriebe integrieren läßt, weil lediglich verhältnismäßig geringfügige Modifikationen am Synchronring und an den Zahnrädern bzw. der Schaltmuffe erforderlich sind.

Bei einer weiteren bevorzugten Ausgestaltung der Erfindung sind Synchronringe beidseits am ersten Zahnrad angeordnet, und es sind Sperrmittel vorgesehen, um beim Verschieben eines Synchronringes den jeweils anderen Synchronring axial zu verrasten.

Diese Maßnahme hat den Vorteil, daß bei der an sich bekannten Anordnung von zwei Synchronringen beidseits eines Zahnrades und einer in beide Richtungen zum Zahnrad verschiebbaren Schaltmuffe die erfindungsgemäßen Vorteile erhalten bleiben. Aufgrund des sich selbstregelnden Synchronisierungsvorganges mit selbsttätig ansteigendem Reibmoment muß nämlich sorgfältig darauf geachtet werden, daß keiner der Synchronringe mit seiner Reibfläche, und sei es auch nur kurzzeitig, in Eingriff mit der Gegen-Reibfläche gerät, um unerwünschte Synchronisierungen im Getriebe zu vermeiden. Hier schaffen die vorstehend genannten Merkmale Abhilfe, weil die Sperrmittel ein unbeabsichtigtes axiales Verschieben der Synchronringe sicher verhindern.

Bei einer bevorzugten Ausgestaltung dieser Variante sind die Sperrmittel als Kugelsperre ausgebildet, bei der eine Kugel teilweise in einem Durchbruch des Synchronringes angeordnet ist, wobei der Durchmesser der Kugel größer ist als die radiale Dicke des Synchronringes im Bereich des Durchbruchs, und ferner die Kugel im übrigen entweder nur in eine radiale Ausnehmung des ersten Zahnrades oder nur in eine radiale Ausnehmung der Schaltmuffe greift.

Dies hat den Vorteil, daß ein Sperrmittel zur Verfügung steht, das reibungsarm arbeitet, andererseits aber die Sperrfunktion in jedem Betriebszustand sicherstellt.

Bei weiteren Ausführungsbeispielen der Erfindung sind die Synchronringe mit einem elastischen Ring versehen, an dem die Schaltmuffe angreift, um jeweils einen der Synchronringe mit seiner Reibfläche in Eingriff an der Gegenfläche zu bringen.

Diese Maßnahme hat den Vorteil, daß eine Vorsynchronisation erreicht wird, weil durch den Angriff der Schaltmuffe am elastischen Ring auch ein Reibmoment zwischen Synchronring und Schaltmuffe, über den bereits erwähnten geringen, begrenzten Drehwinkel hinweg, erreicht wird.

Schließlich ist noch ein Ausführungsbeispiel der Erfindung bevorzugt, bei der die Schaltmuffe und der Synchronring jeweils mit Sperrelementen versehen sind, die sich bei relativer Verdrehung von Schaltmuffe und Synchronring zueinander in axialer Richtung wenigstens teilweise überlappen und eine axiale Verschiebung der Schaltmuffe über eine vorbestimmte Position hinaus versperren, wie dies an sich bekannt ist.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen :

Fig. 1 eine stark schematisierte Seitenansicht, teilweise im Schnitt, eines Teiles eines stirnverzahnten Stufengetriebes nach der Erfindung ;

Fig. 2 eine radiale Ansicht eines Teiles eines Getriebezahnrades mit erfindungsgemäß vorgesehenen Keilflächen ;

Fig. 3 eine radiale Ansicht eines Teiles eines Synchronrings, wie er mit dem Getriebezahnrad gemäß Fig. 2 erfindungsgemäß zusammenarbeitet ;

Fig. 4 das Getriebezahnrad gemäß Fig. 2 und den Synchronring gemäß Fig. 3 in synchronisierter Stellung;

Fig. 5     eine Darstellung ähnlich Fig. 4, jedoch in unsynchronisierter Stellung ;

Fig. 6     eine Schemaskizze zur Erläuterung der sich an den Keilflächen einstellenden Kräfte ;

Fig. 7     eine weitere Schemaskizze zur Erläuterung von sich einstellenden Reibmomenten ;

Fig. 8     eine ausschnittsweise Querschnittsdarstellung zur Erläuterung von Mitteln zum axialen Sperren von Synchronringen nach der Erfindung.

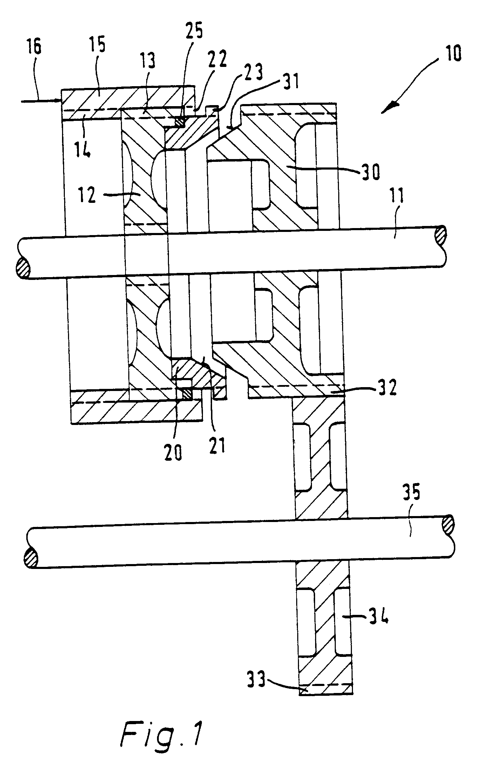

In Fig. 1 ist mit 10 insgesamt ein stirnverzahntes, sperrsynchronisiertes Stufengetriebe eines Kraftfahrzeuges bezeichnet. Auf einer ersten Welle 11 ist drehfest und axial fest ein erstes Zahnrad 12 angeordnet, das mit seiner Außenverzahnung 13 in eine Innenverzahnung 14 einer Schaltmuffe 15 greift, die axial verschiebbar ist, wie mit einem Pfeil 16 angedeutet.

Axial neben dem ersten Zahnrad 12 ist ein Synchronring 20 angeordnet, der mit dem ersten Zahnrad 12 umläuft und gegenüber diesem um einen bestimmten Drehwinkel relativ verdrehbar ist. Der Synchronring 20 weist auf der vom ersten Zahnrad 12 abgewandten Seite eine konische Reibfläche 21 auf.

An der Schaltmuffe 15 sowie am Synchronring 20 sind jeweils Sperrelemente 22 bzw. 23 angebracht. Die Sperrelemente 22, 23 sind nach Art von Verzahnungen ausgebildet. Sie sperren eine axiale Bewegung der Schaltmuffe 15 über die in Fig. 1 rechte Stirnseite des Synchronrings 20 hinaus, wenn der Synchronring 20 gegenüber dem ersten Zahnrad 12 verdreht ist, während sie im unverdrehten Zustand miteinander fluchten und den axialen Weg der Schaltmuffe 15 damit nicht behindern.

Am ersten Zahnrad 12 und am Synchronring 20 sind, wie weiter unten noch im einzelnen erläutert werden wird, jeweils am Umfang Keilflächen vorgesehen, die schräg zu einer Radialebene der Welle 11 angestellt sind und miteinander in Eingriff stehen. Diese Keilflächen bilden ein in Fig. 1 mit 25 lediglich angedeutetes Umfangs-Keilgetriebe.

Ein zweites Zahnrad 30 ist frei drehbar, jedoch axial fixiert, auf der ersten Welle 11, in Fig. 1 rechts vom Synchronring 20, angeordnet. Das zweite Zahnrad 30 weist eine Gegenfläche 31 auf, die ebenfalls konisch ausgebildet ist und parallel zur Reibfläche 21 des Synchronrings 20 verläuft. Die Gegenfläche 31 befindet sich im axialen Abstand von der Reibfläche 21, allerdings ist dieser Abstand in Fig. 1 der Übersichtlichkeit halber übertrieben groß dargestellt.

Das zweite Zahnrad 30 ist mit einer Außenverzahnung 32 versehen, die mit einer entsprechenden Außenverzahnung 33 eines dritten Zahnrades 34 kämmt, das drehfest und axial fest auf einer zweiten Welle 35 angeordnet ist, die parallel zur ersten Welle 11 verläuft.

Wenn ein Gangwechsel vorgenommen werden soll, bei dem das Antriebsmoment von der ersten Welle 11 auf die zweite Welle 35 über die Übersetzung der Zahnräder 30/34 übertragen werden soll, geschieht folgendes :

In der in Fig. 1 dargestellten Stellung läuft das z.B. angetriebene erste Zahnrad 12 mit der ersten Welle 11 um, und die Schaltmuffe 15 sowie der Synchronring 20 drehen sich mit ihm. Wegen des Abstandes der Reibflächen 21/31 voneinander ist die erste Welle 11 unbelastet.

Zum Herbeiführen eines Gangwechsels wird die Schaltmuffe 15 in Richtung des Pfeiles 16 verschoben und nimmt den Synchronring 20 axial mit. Wenn die Reibfläche 21 des Synchronringes 20 auf der Gegenfläche 31 des zweiten Zahnrades 30 zur Auflage kommt, entsteht aufgrund der Drehzahldifferenz zwischen den Zahnrädern 12 und 30 ein Reibmoment. Dieses Reibmoment verdreht den Synchronring 20 gegenüber dem ersten Zahnrad 12. Die Sperrelemente 22, 23 verhindern von diesem Zeitpunkt an, daß die Schaltmuffe 15 noch weiter axial verschoben wird, so daß der einzige Kraftschluß zwischen dem ersten Zahnrad 12 und dem zweiten Zahnrad 30 im Reibschluß der Reibflächen 21/31 besteht. Aufgrund dieses Reibschlusses gleichen sich die Drehzahlen der Zahnräder 12, 30 an, bis das Reibmoment bei der Drehzahldifferenz null ebenfalls zu null wird und der Synchronring 20 sich in die Ausgangslage zurückdrehen kann. Die Sperrelemente 22, 23 fluchten nun miteinander und stehen einer weiteren axialen Verschiebung der Schaltmuffe 15 nicht mehr im Wege. Die Schaltmuffe 15 kann nun in Fig. 1 so weit nach rechts geschoben werden, daß ihre Innenverzahnung 14 auch die Außenverzahnung 32 des zweiten Zahnrades 30 in ihrer linken Hälfte erfaßt. Die Zahnräder 12 und 30 sind damit drehstarr gekoppelt, so daß eine Drehmomentenübertragung von der ersten Welle 11 auf die zweite Welle 35 über die Übersetzung der Zahnräder 30/34 erfolgt.

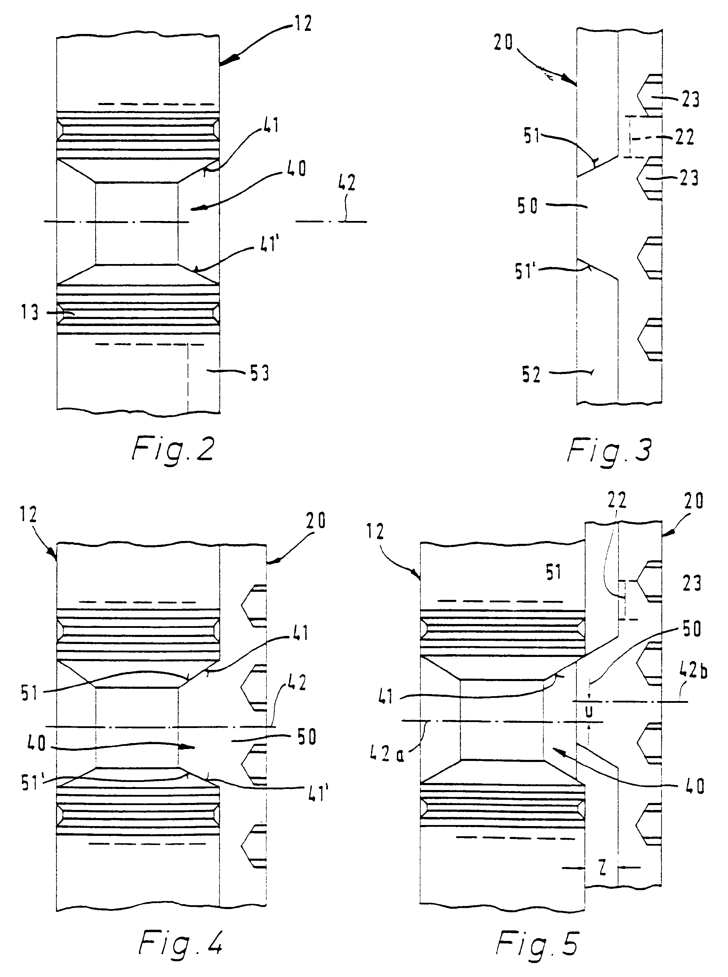

Um den vorstehend beschriebenen Synchronisierungsvorgang bei Anlage der Reibflächen 21/31 aneinander selbsttätig zu regeln, ist das Umfangs-Keilgetriebe 25 vorgesehen, das nachstehend anhand der Fig. 2 bis 7 erläutert werden soll.

Aus der stark vergrößerten radialen Seitenansicht der Fig. 2 erkennt man, daß das erste Zahnrad 12 an einer (oder mehreren) Umfangspositionen mit einer trapezförmigen Aufnahme 40 versehen ist, die in Umfangsrichtung von ersten peripheren Keilflächen 41 und 41′ begrenzt wird. Die Aufnahme 40 verläuft symmetrisch zu einer Mittellinie 42, die ihrerseits parallel zur ersten Welle 11 verläuft.

Fig. 3 zeigt den zugehörigen Ausschnitt des Synchronrings 20, der mit einem komplementär zur Aufnahme 40 geformten Vorsprung 50 versehen ist. Der Vorsprung 50 ist mit zweiten peripheren Keilflächen 51 bzw. 51' versehen.

Das erste Zahnrad 12 und der Synchronring 20 überdecken einander axial teilweise, wenn sie sich im Leerlauf oder in einer synchronisierten Betriebsstellung befinden. Hierzu ist der Synchronring 20 mit einer im Durchmesser etwas reduzierten äußeren ersten Lauffläche 52 versehen, während das erste Zahnrad 12 mit einer entsprechenden zweiten, inneren Lauffläche 53 versehen ist.

Fig. 3 zeigt den vorstehend genannten Zustand bei Leerlauf oder Synchronlauf, bei dem der Vorsprung 50 formschlüssig in die Aufnahme 40 faßt und die zugehörigen Keilflächen 41/51 bzw. 41'/51' aneinanderliegen. In Umfangsrichtung gesehen besteht in diesem Falle Symmetrie zur gemeinsamen Mittellinie 42.

Gelangt nun jedoch die Reibfläche 21 in Anlage an die Gegenfläche 31 (vgl. Fig. 1), so wird infolge des sich einstellenden Reibmomentes der Synchronring 20 gegenüber dem ersten Zahnrad 12 verdreht. Fig. 5 zeigt einen derartigen Betriebszustand, bei dem die Verdrehung (in Fig. 5 von rechts gesehen) in der Weise erfolgt, daß der Synchronring 20 sich in Uhrzeigerrichtung gegenüber dem ersten Zahnrad 12 verdreht. Es gleitet nun die erste Keilfläche 41 des ersten Zahnrades 12 auf der zugehörigen zweiten Keilfläche 51 des Synchronrings 20, was bei einer Relativverdrehung um einen Umfangsabschnitt u zu einer axialen Auslenkung z des Synchronringes 20 gegenüber dem axial starren ersten Zahnrad 12 führt. Die Mittellinien 42a, 42b sind in diesem Falle um den genannten Umfangsabschnitt u gegeneinander um Umfang versetzt.

Durch Vergleich der Fig. 3 und 5 kann man ferner die Funktion der Sperrelemente 22 und 23 erkennen. In der synchronisierten Stellung (Fig. 3) stehen die Sperrelemente 22 und 23 auf Lücke, so daß sie einer axialen Verschiebung der Schaltmuffe 15 nicht im Wege stehen. In der nicht-synchronisierten, verdrehten Stellung der Fig. 5 überlappen die Sperrelemente 22, 23 einander in axialer Richtung jedoch teilweise, so daß ein weiteres Verschieben der Schaltmuffe 15 über eine vorbestimmte axiale Position hinaus nicht möglich ist. Auf diese Weise werden unsynchronisierte Fehlschaltungen vermieden, weil die Innenverzahnung 14 der Schaltmuffe 15 nicht in Eingriff mit der Außenverzahnung 32 des zweiten Zahnrades 30 gebracht werden kann.

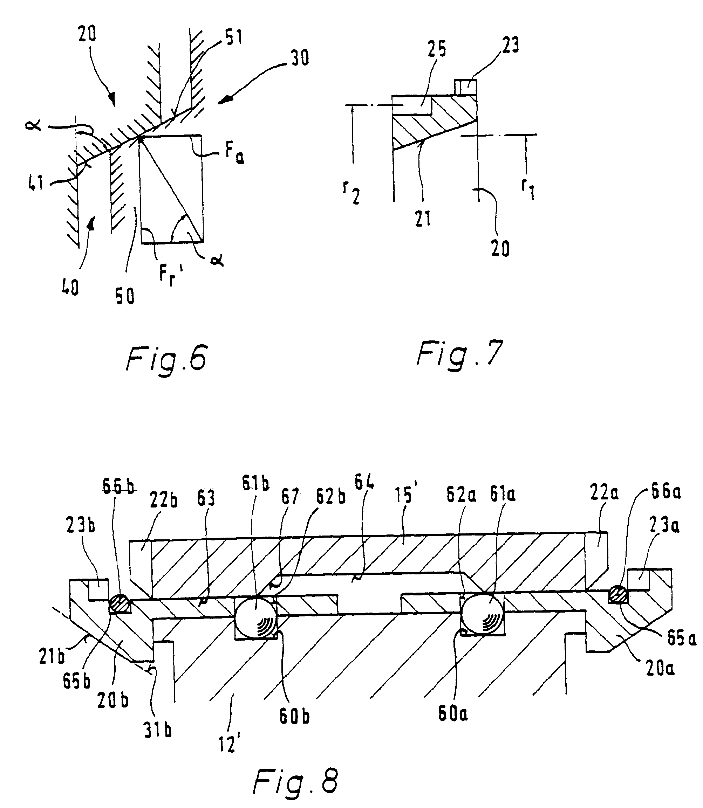

Die Fig. 6 und 7 veranschaulichen die Kräfte, die sich am Keilgetriebe 25 einstellen.

In Fig. 6 erkennt man, daß eine Axialkraft $F_a$ am Synchronring 30 angreift, die mit der an den Keilflächen 41/51 wirkenden Radialkraft $F_r$ wie folgt zusammenhängt :

$$F_a = \frac{F_r}{\mathrm{tg}\,\alpha}$$

wenn $\alpha$ der in Fig. 6 eingezeichnete Neigungswinkel der Keilflächen 41 bzw. 51 zu einer Radialebene ist.

Berücksichtigt man ferner, daß die Kräfte F an der konischen Reibfläche 21 mit einem Radius $r_1$ und am Keilgetriebe 25 mit einem Radius $r_2$ (jeweils mit Bezug auf die Achse des ersten Zahnrades 12 bzw. des Synchronrings 30) angreifen, so läßt sich die oben angegebene Beziehung wie folgt schreiben :

$$F_a = \frac{F_r}{\mathrm{tg}\,\alpha}\,\frac{r_1}{r_2}$$

wobei $F_r$ die an der Reibfläche 21 angreifende Radialkraft ist. Die durch das Keilgetriebe 25 erzeugte Axialkraft $f_a$ erzeugt wiederum eine Reibkraft

$$F_r = \frac{F_a\,\mu}{\sin\beta}$$

wobei $\beta$ der Kegelwinkel der Reibfläche 21 ist. Die zunächst aufgebrachte Axialkraft $F_a$ hat somit, auf dem Umweg über die Reibfläche 21 und das Keilgetriebe 25, eine weitere Axialkraft $F_A$ zur Folge, die der folgenden Beziehung gehorcht :

$$F_A = F_a\,\frac{\mu}{\sin\beta\,\mathrm{tg}\,\alpha}\,\frac{r_1}{r_2} = F_a\,K$$

Durch geeignete Wahl des Reibbeiwertes $\mu$ der Reibfläche 21, der Winkel $\alpha$ und $\beta$ sowie der Radien $r_1$ und $r_2$ läßt sich eine Konstante K einstellen, die größer als 1 ist. In diesem Falle tritt eine Selbstverstärkung bzw. Mitkopplung des Reibmomentes ein, das in kontrollierter Weise auf einen Maximalwert ansteigt, bis sich schließlich Synchronlauf zwischen dem ersten Zahnrad 12, dem Synchronring 20 sowie dem zweiten Zahnrad 30 einstellt.

5

Fig. 8 zeigt noch eine Einzelheit einer Ausführungsform, bei der beidseits eines ersten Zahnrades 12' Synchronringe 20a bzw. 20b angeordnet sind. Um unkontrollierte Synchronisierungen zu vermeiden, die sich einstellen würden, wenn einer der Synchronringe 20a oder 20b unbeabsichtigt in Reibschluß mit dem jeweils zugehörigen Zahnrad gerät, ist eine gegenseitige Verriegelung vorgesehen.

Die Verriegelung besteht in jeweils einem Kugelgesperre, das durch radiale Ausnehmungen 60a, 60b im ersten Zahnrad 12', Kugeln 61a, 61b, Durchbrüchen 62a, 62b in den Synchronringen 20a, 20b sowie einer gemeinsamen radialen Ausnehmung 64 in der Schaltmuffe 15' gebildet wird.

Wie man deutlich aus Fig. 8 erkennen kann, ist der Durchmesser der Kugeln 61a, 61b deutlich größer als die radiale Dicke der Synchronringe 20a, 20b im Bereich der Durchbrüche 62a, 62b. In der in Fig. 8 eingezeichneten Neutralstellung wird der Weg der Kugeln 61a, 61b nach oben durch eine Innenoberfläche 63 der Schaltmuffe 15' versperrt, so daß die Kugeln 61a, 61b teilweise auch in die radialen Ausnehmungen 60a, 60b des ersten Zahnrades 12' eingreifen und damit beide Synchronringe 20a, 20b axial verriegeln.

Wird nun beispielsweise die Schaltmuffe 15' in Fig. 8 nach links verschoben, so ändert sich bei der rechten Kugel 61a nichts, weil diese weiterhin durch die Innenoberfläche 63 im Durchbruch 62a sowie der radialen Ausnehmung 60a gehalten wird. Die linke Kugel 61b kann hingegen in die radiale Ausnehmung 64 der Schaltmuffe 15' austreten, so daß die Verriegelung der Schaltmuffe 20 gelöst wird und sich diese nach links bewegen kann. Dies geschieht dadurch, daß die Schaltmuffe 15' in Anlage an einen in einer Ringnut 65b des Synchronrings 20b befindlichen elastischen Ring 66b gerät. Der Synchronring 20b wird nun nach links verschoben und gelangt mit seiner Reibfläche 21b an die zugehörige Gegenfläche 31b, wonach sich der oben ausführlich geschilderte Synchronisierungsvorgang einstellt. Beim Lösen des Ganges nimmt die Ausnehmung 64 mit einer seitlichen Begrenzungsflanke 67 die Kugel 61b und damit auch den Synchronring 20b wieder mit, bis die Kugel 61b in die radiale Ausnehmung 60b zurückfällt und der Synchronring 20b damit wieder verriegelt ist.

Es kann beispielsweise auch vorgesehen sein, den Synchronring mit dem zweiten Zahnrad 30 umlaufen zu lassen und eine Gegen-Reibfläche am ersten Zahnrad 12 vorzusehen. Auch ist denkbar, das Keilgetriebe statt zwischen dem ersten Zahnrad und dem Synchronring zwischen der Schaltmuffe und dem Synchronring wirksam werden zu lassen. Weiterhin ist es möglich, den Synchronring in Funktionen eines Betätigungselementes und eines Reibelementes aufzuteilen, wobei das Betätigungselement mit einem Zahnrad umläuft und gegenüber diesem verdreh- und unter der Wirkung des Keilgetriebes auch axial verschiebbar ist, während das Reibelement als "schwimmender" Synchronring zwischen zwei Gegenflächen am Betätigungselement und am Gegen-Zahnrad angeordnet ist.

## Patentansprüche

1. Stufengetriebe für Kraftfahrzeuge, mit einem ersten Zahnrad (12) und einem zweiten Zahnrad (30), die auf einer gemeinsamen Welle (11) nebeneinander angeordnet sind, mit zwischen den Zahnrädern (12, 30) angeordneten und relativ zu diesen axial verschieblichen Synchronisierungsmitteln (20) zum Angleichen der Drehzahlen der Zahnräder (12, 30), wobei ein Betätigungselement der Synchronisierungsmittel mit dem ersten Zahnrad (12) umläuft, diesem gegenüber um einen begrenzten Winkel (u) verdrehbar ist und eine Umfangs-Reibfläche (21) aufweist, die durch axiales Verschieben mit einer Gegen-Reibfläche (31) des zweiten Zahnrades (30) in Reibschluß bringbar ist und weiterhin eine zur Radialebene schräg angestellte erste Keilfläche (51, 51') aufweist, die an einer zugeordneten zweiten Keilfläche (41, 41') anliegt, wobei das erste Zahnrad (12) drehfest und das zweite Zahnrad (30) drehbar auf der Welle (11) angeordnet sind, **dadurch gekennzeichnet**, daß das zweite Zahnrad (30) mit einem weiteren, auf einer zur ersten Welle (11) parallelen zweiten Welle (35) drehfest angeordneten dritten Zahnrad (34) kämmt, daß das erste Zahnrad (12) mit einem Synchronring (20) umläuft, daß eine erste Reibfläche (21) am Synchronring (20) mit einer Gegen-Reibfläche (31) am zweiten Zahnrad (30) zusammenarbeitet, und daß eine Schaltmuffe (15) formschlüssig über das erste und das zweite Zahnrad (12, 30) schiebbar ist.

2. Stufengetriebe nach Anspruch 1, **dadurch gekennzeichnet**, daß Synchronringe (20a, 20b) beidseits am ersten Zahnrad (12) angeordnet sind und daß Sperrmittel (60, 61, 62) vorgesehen sind, um beim Verschieben eines Synchronrings (20a, 20b) den jeweils anderen Synchronring (20b, 20a) axial zu verrasten.

3. Stufengetriebe nach Anspruch 2, **dadurch gekennzeichnet**, daß die Sperrmittel (60 bis 62) als Kugelsperre ausgebildet sind, bei der eine Kugel (61) teilweise in einem Durchbruch (62) des Synchronrings (20) angeordnet ist, wobei der Durchmesser der Kugel (61) größer ist als die radiale Dicke des Synchronrings (20) im Bereich des Durchbruchs (62), und ferner die Kugel (61) im übrigen entweder nur in eine radiale Ausnehmung (60) des ersten Zahnrades (12') oder nur in eine radiale Ausnehmung (64) der Schaltmuffe (15') greift.

4. Stufengetriebe nach Anspruch 2 oder 3, **dadurch gekennzeichnet**, daß die Synchronringe (20a, 20b) mit einem elastischen Ring (66a, 66b) versehen sind, an denen die Schaltmuffe (15a) angreift, um jeweils einen der Synchronringe (20a, 20b) mit seiner Reibfläche (21a') in Eingriff an der Gegenfläche (31') zu bringen.

5. Stufengetriebe nach einem der Ansprüche 1 bis 4, **dadurch gekennzeichnet**, daß die Schaltmuffe (15) und der Synchronring (30) jeweils mit Sperrelementen (22, 23) versehen sind, die sich bei relativer Verdrehung von Schaltmuffe (15) und Synchronring (30) zueinander in axialer Richtung wenigstens teilweise überlappen und eine axiale Verschiebung der Schaltmuffe (15) über eine vorbestimmte Position hinaus versperren.

## Claims

1. Multi-step reduction gear for motor vehicles, comprising a first gear (12) and a second gear (30) arranged alongside one another on a common shaft (11), comprising synchronisation means (20) arranged between the gears (12, 30) and sliding axially relative thereto for adjusting the speeds of the gears (12, 30), an actuating element for the synchronisation means rotating with the first gear (12), said element being rotatable through a limited angle (u) and having a circumferential friction surface (21) which can be brought into frictional engagement with a counter friction surface (31) of the second gear (3) by means of axial sliding and furthermore having a first wedge surface (51, 51') set at an angle relative to the radial plane and resting against an associated second wedge surface (41, 41'), the first gear (12) being rigidly fixed to and the second gear (30) being free to rotate on the shaft (11), characterised in that the second gear (30) meshes with a further third gear (34) rigidly fixed to a second shaft (35) parallel to the first shaft (11), that the first gear (12) rotates with a synchronising ring (20), that a first friction surface (21) on the synchronising ring (20) cooperates with a counter friction surface (31) on the second gear (30) and that a synchroniser sleeve (15) can slide positively over the first and second gears (12, 30).

2. Multi-step reduction gear according to claim 1, characterised in that synchronising rings (20a, 20b) are arranged on either side of the first gear (12) and that locking means (60, 61, 62) are provided for axial locking of one synchronising ring (20b, 20a) upon sliding of the other synchronising ring (20a, 20b).

3. Multi-step reduction gear according to claim 2, characterised in that the locking means (60 to 62) is designed as a ball lock, in which one ball (61) is partially arranged in an opening (62) of the synchronising ring (20), the diameter of the ball (61) being greater than the radial thickness of the synchronising ring (20) in the region of the opening (62), and furthermore the ball (61) also engages either only one radial recess (60) of the first gear (12') or only one radial recess (64) of the synchroniser sleeve (15').

4. Multi-step reduction gear according to claim 2 or claim 3, characterised in that the synchronising rings (20a, 20b) are provided with a flexible ring (66a, 66b) engaged by the synchroniser sleeve (15a) in order to bring the friction surface (21a') of one of the synchronising rings (20a, 20b) into engagement with the counter surface (31').

5. Multi-step reduction gear according to one of claims 1 to 4, characterised in that the synchroniser sleeve (15) and the synchronising ring (30) are each provided with locking elements (22, 23) which at least partially overlap one another in the axial direction upon relative rotation of the synchroniser sleeve (15) and the synchronising ring (30) and prevent axial sliding of the synchroniser sleeve (15) beyond a predetermined position.

## Revendications

1. Boîte de vitesses pour véhicules à moteur, comportant un premier pignon (12) et un second pignon (30), qui sont disposés l'un à côté de l'autre sur un arbre commun (11), et des moyens de synchronisation (20) disposés entre les pignons (12, 30) et pouvant coulisser axialement par rapport à eux pour égaliser les vitesses de rotation des pignons (12, 30), où un élément actif des moyens de synchronisation tourne avec le premier pignon (12), peut pivoter d'un angle limité (u) par rapport à celui-ci, comporte une surface périphérique de friction (21) qui peut, par coulissement axial, être engagée par friction sur une surface de friction opposée (31) du second pignon (30), et comporte en outre une première surface de clavetage (51, 51') disposée obliquement par rapport au plan radial et appuyée contre une seconde surface de clavetage (41, 41') qui lui correspond, le premier pignon (12) étant monté sur l'arbre (11) de manière non rotative et le second pignon (30) de manière rotative, **caractérisée** en ce que le second pignon (30) est engrené sur un troisième pignon (34) monté de manière non rotative sur un second arbre (35) parallèle au premier (11), en ce que le premier pignon (12) tourne avec une bague de synchronisation (20), en ce qu'une première surface de friction (21), située sur la bague de synchronisation (20), coopère avec une surface de friction opposée (31) située sur le second pignon (30), et en ce qu'un manchon de commande (15) est coulissant et en engagement positif sur le premier et le second pignon (12, 30).

2. Boîte de vitesses selon la revendication 1, **caractérisée** en ce que des bagues de synchronisation (20a, 20b) sont disposées des deux côtés du premier pignon (12) et en ce que des moyens de verouillage (60, 61, 62) sont prévus pour retenir axialement l'une des bagues de synchronisation (20a, 20b) quand l'autre coulisse.

3. Boîte de vitesses selon la revendication 2, **caractérisée** en ce que les moyens de verrouillage (60 à 62) sont formés par un verrouillage à billes dans lequel une bille (61) est logée en partie dans un petit trou (62) de la bague de synchronisation (20), le diamètre de la bille (61) étant plus grand que l'épaisseur radiale de la bague (20) au voisinage du trou (62), et dans lequel la bille (61) s'engage en outre soit uniquement dans un évidement radial (60) du premier pignon (12'), soit uniquement dans un évidement radial (64) du manchon de commande (15').

4. Boîte de vitesses selon la revendication 2 ou 3, **caractérisée** en ce que les bagues de synchronisation (20a, 20b) sont pourvues d'un anneau élastique (66a, 66b) contre lequel le manchon de commande (15a) s'appuie pour amener la surface de friction (21a') d'une des bagues (20a, 20b) en contact avec la surface opposée (31').

5. Boîte de vitesses selon l'une des revendications 1 à 4, **caractérisée** en ce que le manchon de commande (15) et la bague de synchronisation (30) comportent chacun des éléments d'arrêt (22, 23) qui, en cas de pivotement relatif entre le manchon (15) et la bague (30), se recouvrent au moins partiellement en direction axiale et empêchent un coulissement axial du manchon (15) au-delà d'une position prédéterminée.

Fig.1

Fig.2

Fig.3

Fig.4

Fig.5

Fig.6

Fig.7

Fig.8